# EUROPEAN PATENT APPLICATION

(11) **EP 4 826 588 A1**
(43) Date of publication of application: **21.10.2026**
(21) Application number: 26167286.9
(22) Date of filing: 24.03.2026
(51) Int. Cl.: G06F 30/15, G06F 30/23, G06F 30/28, G06F 111/10, G06F 119/14, G06F 119/20

(54) **EVALUATION OF AIRFOIL BLENDS USING STRESS SCALING METHODS**

(30) Priority: 15.04.2025 US 202519179955
(71) Applicant: RTX Corporation, Farmington, CT 06032 (US)
(72) Inventor: GUO, Jianping, Farmington, Connecticut, 06032 (US); VANDENBOSCH, Ross A., Farmington, Connecticut, 06032 (US); HALL, Jennifer B., Farmington, Connecticut, 06032 (US); HALL, Benjamin D., Farmington, Connecticut, 06032 (US)
(74) Representative: Dehns

(57) **Abstract**

A method of evaluating the accuracy of a plurality of stress scaling methods to a proposed blended airfoil includes the steps of 1) receiving nominal finite element nodal results and nominal computational fluid dynamic results for an undamaged airfoil, to reach a nominal undamaged airfoil physical response, 2) applying a plurality of stress scaling methods to a proposed blended airfoil to determine a blended airfoil physical response to reach a predicted physical response for each of the plurality of stress scaling methods and 3) providing rig test measured actual stress responses on airfoils with a similar blend, comparing the rig test response to the predicted blended airfoil physical responses to evaluate the accuracy of each of the stress scaling methods.

## Description

### BACKGROUND

This application relates to evaluating the feasibility of blending a damaged airfoil utilizing various stress scaling methods. The stress scaling methods themselves are novel. There is also a method of evaluating the accuracy of each of the methods.

Gas turbine engines are known, and typically include a plurality of rotating elements. As one example, a propulsor is driven to supply air as propulsion air, and into a core engine. The core engine includes a compressor which compresses the air and delivers it into a combustor where it is mixed with fuel and ignited. Products of this combustion pass downstream over turbine rotors, driving them to rotate.

Each of the rotors typically include a plurality of blades having an airfoil shape. Damage can occur to the airfoil during operation of an associated gas turbine engine, especially mounted on an aircraft.

One method of repairing a damaged airfoil is to smooth the damaged surface by removing material such that it blends into the remainder of the airfoil. This process, called a blend, may sometimes require so much blending that the airfoil will no longer be acceptable with regard to resultant stress.

One type of rotor utilized in modem gas turbine engines is a so called integrally bladed rotor. In such a rotor a core is formed integrally with a plurality of outwardly extending blades. Especially when the damage mentioned above occurs in an integrally bladed rotor, it would be desirable to repair the damaged airfoil.

Currently costly computational fluid dynamic analysis is utilized to evaluate the acceptability of the airfoil after the blend.

### SUMMARY

In a featured embodiment, a method of evaluating the accuracy of a plurality of stress scaling methods to a proposed blended airfoil includes the steps of 1) receiving nominal finite element nodal results and nominal computational fluid dynamic results for an undamaged airfoil, to reach a nominal undamaged airfoil physical response, 2) applying a plurality of stress scaling methods to a proposed blended airfoil to determine a blended airfoil physical response to reach a predicted physical response for each of the plurality of stress scaling methods and 3) providing rig test measured actual stress responses on airfoils with a similar blend, comparing the rig test response to the predicted blended airfoil physical responses to evaluate the accuracy of each of the stress scaling methods.

In another embodiment according to the previous embodiment, further includes making a decision as to whether a particular proposed blend meets acceptable stress response utilizing at least one of the stress scaling methods after the comparison.

In another embodiment according to any of the previous embodiments, the undamaged airfoil and the proposed blended airfoil are on integrally bladed rotors.

In another embodiment according to any of the previous embodiments, at least one of the stress scaling methods places a plurality of strain gauges on a part that has received the proposed blended airfoil, and applies a force to measure a peak stress, and then identifies a location of one of the strain gauges that measures the peak stress, and utilizing the measured peak stress to determine whether the proposed blended airfoil will have an acceptable stress response.

In another embodiment according to any of the previous embodiments, the stress scaling is modeled on a computer by applying a single force to the proposed blend at a peak deflection node.

In another embodiment according to any of the previous embodiments, the stress is determined utilizing the equation: $S = \frac{MF}{2 {{ζω}_{n}}^{2}} σ$ wherein *S* = physical stress response, *σ* = modal stress, *MF* = modal force, *ζ* = damping ratio, *ωₙ* = natural frequency.

In another embodiment according to any of the previous embodiments, the stress is also determined utilizing the equation: ${s}_{1} = {s}_{0} ∗ \frac{{USUM}_{max , 1}}{{USUM}_{max , 0}} ∗ \frac{{σ}_{1}}{{σ}_{0}} ∗ \frac{{{ω}_{0}}^{2}}{{{ω}_{1}}^{2}}$ wherein 0 = nominal, 1 = blended, *s*₀ = physical stress in the nominal model, *s*₁ = physical stress in the blended model, *USUMₘₐₓ* = peak displacement.

In another embodiment according to any of the previous embodiments, the stress scaling method is determined utilizing the equation: ${s}_{1} = {s}_{0} ∗ \frac{{USUM}_{max , 0}}{{USUM}_{max , 1}} ∗ \frac{{σ}_{1}}{{σ}_{0}}$ wherein 0 = nominal, 1 = blended, *s*₀ = physical stress in the nominal model, *s*₁ = physical stress in the blended model, *USUMₘₐₓ* = peak displacement.

In another embodiment according to any of the previous embodiments, the stress scaling method is performed on a computer program with a model of the proposed blend and by applying a plurality of loaded force responses.

In another embodiment according to any of the previous embodiments, the forced responses are evaluated utilizing the following equation: $S = \frac{Fσ}{2 ζ {{ω}_{n}}^{2}}$ wherein S = Actual Stress (physical stress), F = Forcing magnitude (modal force), σ = Peak airfoil eigenstress (modal stress), ζ = Damping ratio, *ωₙ* = Natural frequency (2*πf*)*.*

In another embodiment according to any of the previous embodiments, the force is determined utilizing the following equation: $F = \left‖{∅}_{i}^{*} {g}_{i}\right‖$ wherein Øᵢ = Displacement vector at node I, ${∅}_{i}^{*} =$ Displacement complex conjugate transpose, gᵢ = Force vector at node i.

In another featured embodiment, a method of determining whether a resultant stress in a damaged airfoil with a blend is acceptable including the steps making a decision as to whether a particular proposed blend to the damaged airfoil meets acceptable stress response utilizing at least one stress scaling method after a comparison to a nominal airfoil, the nominal airfoil and the damaged airfoil are integrally bladed rotors, the at least one stress scaling method includes at least one of the following the stress scaling method places a plurality of strain gauges on a prior part that has received the proposed blend, and applies a force to measure a peak stress, and then identifies a location of a strain gauge that measures the peak stress, and utilizing the measured peak stress to determine whether the damaged part will have acceptable stress response after the proposed blend, the stress scaling method is modeled on a computer by applying a single force to the proposed blend at a peak deflection node and/or the stress scaling method is performed on a computer program with a model of the proposed blend and by applying a plurality of loaded force responses and the stress scaling method considers a nominal airfoil physical response from an undamaged airfoil, along with utilizing the stress scaling methods to determine a predicted blended airfoil physical response.

In another embodiment according to any of the previous embodiments, further including making a decision as to whether a particular proposed blend meets acceptable stress response utilizing the predicted blended airfoil physical response.

In another embodiment according to any of the previous embodiments, the nominal airfoil and the damaged airfoil are one part of integrally bladed rotors.

In another embodiment according to any of the previous embodiments, the at least one of the stress scaling method places a plurality of strain gauges on a part that has received the proposed blend, and applies a force to measure a peak stress, and then identifies a location of a strain gauge that measures the peak stress, and utilizing the determined peak stress to determine whether the blended part will have acceptable stress response.

In another embodiment according to any of the previous embodiments, the at least one stress scaling is modeled on a computer by applying a single force to the proposed blend at a peak deflection node.

In another embodiment according to any of the previous embodiments, the stress is determined utilizing the equation: $S = \frac{MF}{2 {{ζω}_{n}}^{2}} σ$ wherein *S* = physical stress response, *σ* = modal stress, *MF* = modal force, *ζ* = damping ratio, *ωₙ* = natural frequency.

In another embodiment according to any of the previous embodiments, the stress is also determined utilizing the equation: ${s}_{1} = {s}_{0} ∗ \frac{{USUM}_{max , 1}}{{USUM}_{max , 0}} ∗ \frac{{σ}_{1}}{{σ}_{0}} ∗ \frac{{{ω}_{0}}^{2}}{{{ω}_{1}}^{2}}$ wherein 0 = nominal, 1 = blended, *s*₀ = physical stress in the nominal model, *s*₁ = physical stress in the blended model, *USUMₘₐₓ* = peak displacement.

In another embodiment according to any of the previous embodiments, the stress is determined utilizing the equation: ${s}_{1} = {s}_{0} ∗ \frac{{USUM}_{max , 0}}{{USUM}_{max , 1}} ∗ \frac{{σ}_{1}}{{σ}_{0}}$ wherein 0 = nominal, 1 = blended, *s*₀ = physical stress in the nominal model, *s*₁ = physical stress in the blended model, *USUMₘₐₓ* = peak displacement.

In another embodiment according to any of the previous embodiments, the stress scaling is performed on a computer program with a model of the proposed blend and by applying a plurality of loaded force responses and using the following equation: $S = \frac{Fσ}{2 ζ {{ω}_{n}}^{2}}$ wherein S = Actual Stress (physical stress), F = Forcing magnitude (modal force), σ = Peak airfoil eigenstress (modal stress), ζ = Damping ratio, *ωₙ =* Natural frequency (2*πf*)*.*

The present disclosure may include any one or more of the individual features disclosed above and/or below alone or in any combination thereof.

These and other features of the present disclosure can be best understood from the following specification and drawings, the following of which is a brief description.

### BRIEF DESCRIPTION OF THE DRAWINGS

Figure 1A schematically shows a gas turbine engine.
Figure 1B schematically shows a rotor which may be from the Figure 1A engine with damage.
Figure 1C shows a blend operation on a damaged airfoil such as the Figure 1B airfoil.
Figure 2 shows a Goodman diagram which can be utilized to evaluate whether the stress that will occur in the blended airfoil is within acceptable limits.
Figure 3 is a flow chart of a method of evaluating a plurality of stress scaling methods.
Figure 4 shows a method of determining resultant stress utilizing a physical part and gauges.
Figure 5 shows a single point force application to a computer model of the blended airfoil.
Figure 6 shows a model peak deflection method of determining the stress on a computer model.
Figure 7A shows forced responses to evaluate the blended airfoil as a computer model.
Figure 7B discloses a chart of maximum vibratory stress compared to a number of runs in a simulation.

### DETAILED DESCRIPTION

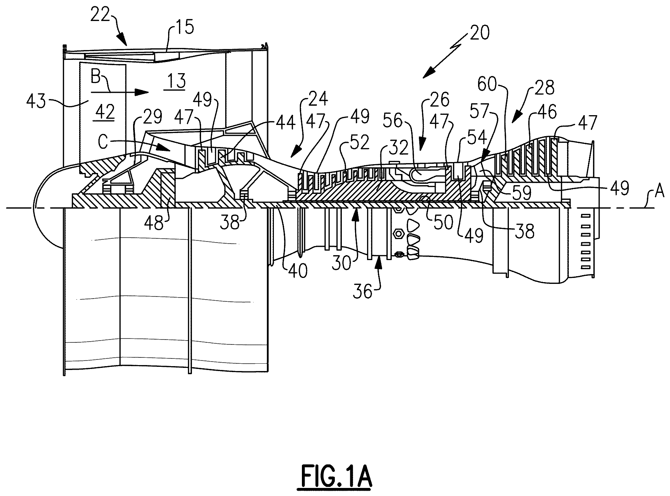

Figure 1A schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches, or more narrowly no more than 75 inches. For example, the maximum radius of the fan blades 43 can be between 45 inches and 60 inches, such as between 50 inches and 55 inches. Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. It should be understood that the teachings disclosed herein may be utilized with various engine architectures, such as low-bypass turbofan engines, prop fan and/or open rotor engines, turboprops, turbojets, etc. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F). The TET may be greater than or equal to 2700.0 °F, or more narrowly less than or equal to 3500.0 °F, such as between 2750.0 °F and 3350.0 °F. The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F, or more narrowly greater than or equal to 800.0 °F, such as between 900.0 °F and 975.0 °F. The relatively low EGT can be utilized in combination with the other techniques disclosed herein to reduce fuel consumption.

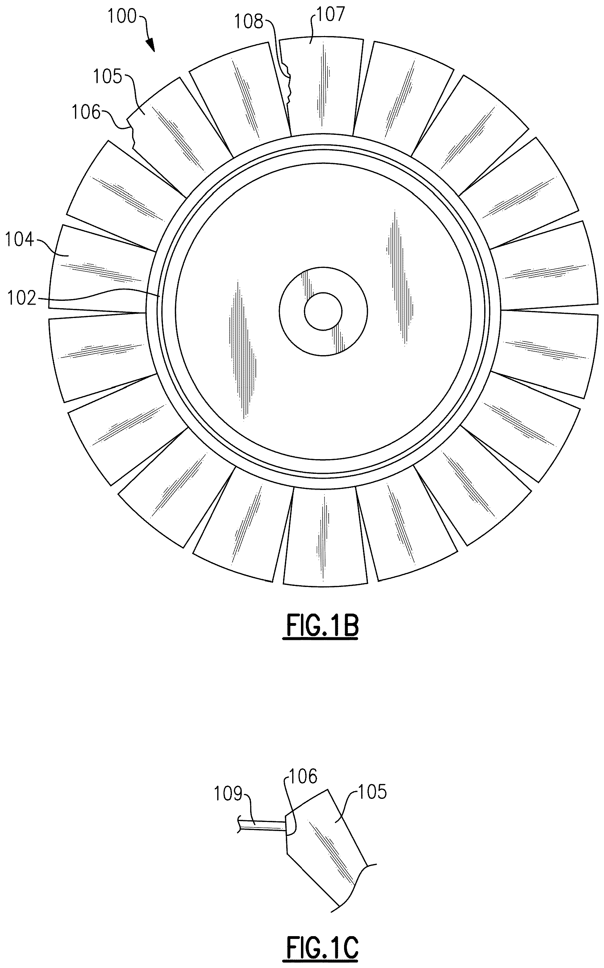

The engine shown in Figure 1A may have a plurality of rotors which are known as integrally bladed rotors or "IBRs." An example IBR is shown in Figure 1B. A core 102 is formed as an integral unit with a plurality of blades 104. The blades 104 are formed as airfoils extending between a leading edge and a trailing edge, and having suction and pressure sides. IBRs are often utilized in modern fan and/or compressors for gas turbine engines.

In the IBR 100 illustrated in Figure 1B, blades 105 and 107 have damage as shown at 106 and 108, respectively. Such damage could be caused by foreign objects entering the engine. As an example, birds may sometimes be pulled into the engine and cause damage.

It would be expensive to replace the entire IBR 100, and thus it is often desirable to repair the damage 106 and/or 108.

Figure 1C schematically shows a process wherein a blending tool 109 is blending the damage 106 such that it merges more smoothly with the rest of blade 105.

At times, the blend may be more extensive than would be desirable and still result in an acceptable stress levels in the airfoil 105.

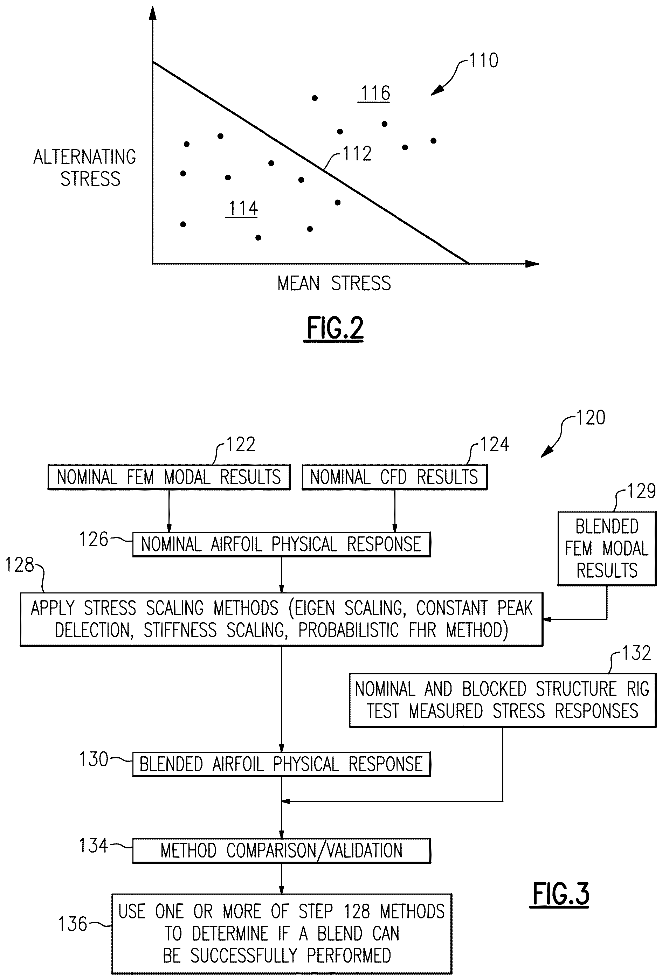

Figure 2 shows a so called "Goodman" chart 110. In the Goodman chart, alternating stress is mapped against a mean stress level. A line 112 separates acceptable stress at 114, that could lead to a longer life for the associated airfoil. On the other hand, area 116 shows instances of blends which would be outside the line 112, and thus result in very limited airfoil life, pointing to not doing the repair.

Figure 3 is a flow chart 120 for evaluating a plurality of stress scaling methods as will be disclosed below. Nominal finite element method ("FEM") nodal results from parts which are similar to the part to be repaired are received at step 122. Similarly, nominal computer computational fluid dynamic analysis results are also received at step 104. From steps 122 and 124 a nominal airfoil physical response is identified at step 126.

At step 128 a plurality of stress scaling methods are applied to the nominal airfoil physical response. In examples to be disclosed below, there may Eigen scaling, constant peak deflection scaling, stiffness scaling and a multi-load force response or probabilistic FHR scaling.

Also blended FEM modal results are considered at step 129.

For each of these scaling methods, a blended airfoil physical response is computed at step 130. The nominal and blended airfoils are then tested to measure stress response on a structural rig test at step 132. At step 134 the test results 132 and the predicted physical response 130 are compared. From this, at step 136 one or more of the scaling techniques of step 128 are then utilized to evaluate whether a particular successful blend can be performed on future parts. That is, parts other than the blended part tested at step 132. It may be with certain type blends and parts distinct ones of the disclosed scaling methods will be most accurate.

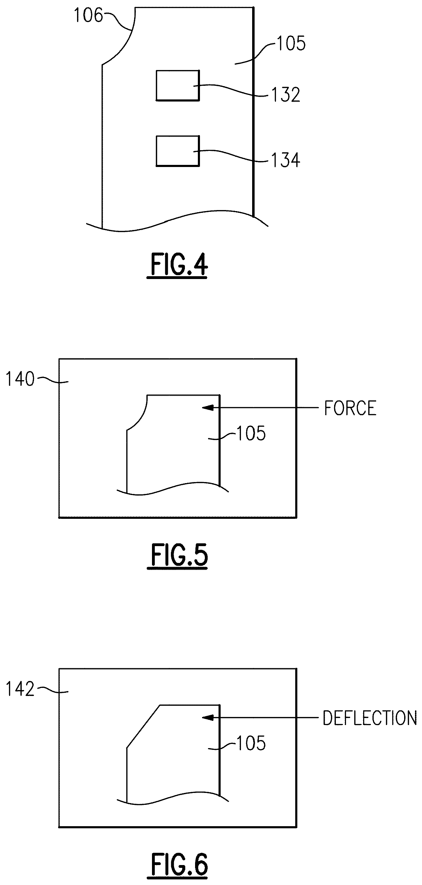

Figure 4 shows a method of constant peak gauge stress, or Eigen stress scaling which might be used at step 128. An airfoil 105 having damage 106 is provided with strain gauges 132 and 134. This method is performed with the actual physical part to be blended.

This method assumes that a maximum stress measured in the test from the strain gauges 132 and 134 at a particular location is constant across all similar airfoil. Typically, the location chosen for the stress to be constant is the location of the strained gauge that measures the peak stress. That is, stress is measured at a plurality of strain gauges 132/134. One would have a peak stress. Of course more than two gauges could be used.

The gauge location that measures the peak stress typically has a good stress ratio to the peak stress of that mode and is not at a location that is very sensitive to gauge placement. In this method, the primary variation being assessed is the change in the gauge to peak ratios for each of the modes, assuming that all blades will have the same stress response at the chosen location to the modal forcing function.

In the rig test, the gage locations on the nominal and blended blades are the same. A couple of representative blends are tested. The maximum stress responses measured in the test are compared to the estimated stresses through scaling methods to evaluate the estimation methods. The purpose of the stress scaling is to estimate the maximum stress responses of the blended blades from the nominal stress responses. A Goodman analysis can be performed to evaluate if the response exceeds the material high cycle fatigue limits (not used to determine which method is better). The evaluation of methods is based on the direct comparison between the estimated response and the measured response of blended blades.

Figure 5 shows an alternative scaling method that may be called stiffness scaling, or constant single point mobile forcing. This method creates a computer model 105 of the blended part within a computer 140. A force is then applied on a peak deflection node. That peak force is then assumed to be constant across all blades, and the peak deflection where the force is applied does not change location. Generally it is assumed that the limiting location will not change in this method.

A relationship between physical stress response and modal stress can be defined as: $S = \frac{MF}{2 {{ζω}_{n}}^{2}} σ$

Wherein:
S = physical stress response
*σ* = modal stress
*MF* = modal force
*ζ* = damping ratio
*ωₙ* = natural frequency

Then, the stress is evaluating using: ${s}_{1} = {s}_{0} ∗ \frac{{USUM}_{max , 1}}{{USUM}_{max , 0}} ∗ \frac{{σ}_{1}}{{σ}_{0}} ∗ \frac{{{ω}_{0}}^{2}}{{{ω}_{1}}^{2}}$

Wherein:
0 = nominal
1 = blended
*s*₀ = physical stress in the nominal model
*s*₁ = physical stress in the blended model
*USUMₘₐₓ* = peak displacement

The stresses may be calculated using scripts such as Python or MATLAB, based on modal stresses calculated in ANSYS. Of course other programs may be used.

Figure 6 shows a method that could be called constant peak deflection scaling. Here, the part 105 is again modeled in a computer 142 and a deflection force applied.

This method assumes that all blades will respond to a constant magnitude of deflection for each mode. When all blades are assumed to have the same peak deflection, the limiting vibratory stress can be scaled based on the changes in the stress to deflection ratios of the airfoil. Generally it is assumed that the limiting location will not change in this method, and the Goodman chart can be created and evaluated using just the peak vibration node.

This method relies on: ${s}_{1} = {s}_{0} ∗ \frac{{USUM}_{max , 0}}{{USUM}_{max , 1}} ∗ \frac{{σ}_{1}}{{σ}_{0}}$

Wherein:
0 = nominal
1 = blended
*s*₀ = physical stress in the nominal model
*s*₁ = physical stress in the blended model
*USUMₘₐₓ* = peak displacement

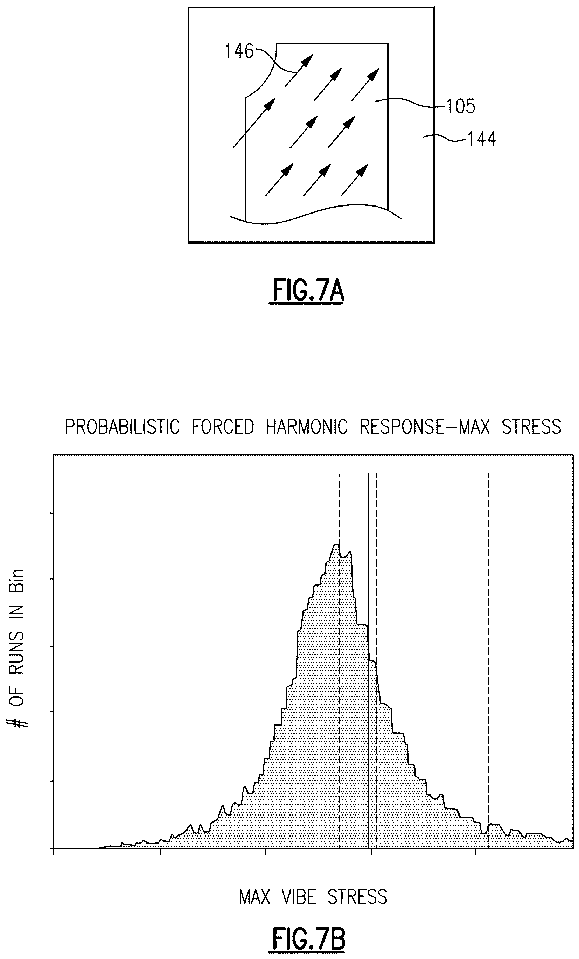

Figure 7A shows a multiload force response, or probabilistic method. Here, the airfoil model 105 is hit with a plurality of forces 146 across the airfoil. This is done within a computer 144.

This method assumes that the modal forcing function is not known and cannot be compared to a peak force or the peak deflection node. In order to determine the vibratory stress many different unsteady forcing functions are created, applied to a baseline model, and scaled such that the peak stress in the baseline model matches the limiting vibratory stress provided by the user.

This same forcing functions are subsequently placed on the new airfoil created by the blend (as modeled) creating a distribution of scaled vibratory stresses. The user provides a percentile to be reported by the distribution of the vibratory stress which is utilized to calculate the Goodman chart. Typically, the Goodman chart is calculated on all nodes in the component of interest, and the most limiting Goodman is utilized. Here $S = \frac{Fσ}{2 ζ {{ω}_{n}}^{2}}$ is utilized.

Wherein:
S = Actual Stress (physical stress)
F = Forcing magnitude (modal force)
σ = Peak airfoil eigenstress (modal stress)
   ζ = Damping ratio
*ωₙ* = Natural frequency (2*πf*)
And then $F = \left‖{∅}_{i}^{∗} {g}_{i}\right‖$ is utilized.

Wherein:
Øᵢ = Displacement vector at node i
${∅}_{i}^{∗}$ = Displacement complex conjugate transpose
gᵢ = Force vector at node i

Figure 7B is an example of a chart of the maximum vibratory stress compared to the number of runs in the simulation.

A controller for performing this method may include one or more computer processors, memory, storage means, network devices, input and/or output devices, and/or interfaces. The computing devices may be operable to execute one or more software programs. The structure may be hard system or cloud based. The computing devices may be operable to communicate with one or more networks established by one or more computing devices. The memory may include UVPROM, EEPROM, FLASH, RAM, ROM, DVD, CD, a hard drive, or other computer readable medium which may store data and/or the functionality of this description. The computing device(s) and/or processor(s) may be collectively operable to execute any of the functionality disclosed herein. The computing devices may be a desktop computer, laptop computer, smart phone, tablet, or any other computer device. Input devices may include a keyboard, mouse, touchscreen, etc. The output devices may include a monitor, speakers, printers, etc. Each of the computing devices may include one or more processors coupled to memory. The computing devices may be coupled to each other by one or more connections. The connection may be a wired and/or wireless connection. The connections may be established over one or more networks and/or other computing systems.

A method of evaluating the accuracy of a plurality of stress scaling method to a proposed blended airfoil under this disclosure could be said to include the steps of 1) receiving nominal finite element nodal results and nominal computational fluid dynamic results for an undamaged airfoil, to reach a nominal undamaged airfoil physical response, 2) applying a plurality of stress scaling methods to a proposed blended airfoil to determine a blended airfoil physical response to reach predicted physical response for each of the plurality of stress scaling methods, 3) providing rig test measured actual stress responses on airfoils with a similar blend, comparing the rig test response to the predicted blended airfoil physical responses to evaluate the accuracy of each of the stress scaling methods.

While embodiments have been disclosed, a worker of skill in this art would recognize that modifications would come within the scope of this disclosure. For that reason, the following claims should be studied to determine the true scope and content of this disclosure.

Although embodiments of this disclosure have been shown, a worker of ordinary skill in this art would recognize that modifications would come within the scope of this disclosure. As one example, while the propulsor is disclosed as a fan it could also be an open rotor. For that reason, the following claims should be studied to determine the true scope and content of this disclosure.

## Claims

1. A method of evaluating the accuracy of a plurality of stress scaling methods to a proposed blended airfoil comprising the steps of:
1) receiving nominal finite element nodal results and nominal computational fluid dynamic results for an undamaged airfoil, to reach a nominal undamaged airfoil physical response;
2) applying a plurality of stress scaling methods to a proposed blended airfoil to determine a blended airfoil physical response to reach a predicted physical response for each of the plurality of stress scaling methods; and
3) providing rig test measured actual stress responses on airfoils with a similar blend, comparing the rig test response to the predicted blended airfoil physical responses to evaluate the accuracy of each of the stress scaling methods.

2. The method as set forth in claim 1, further comprising making a decision as to whether a particular proposed blend meets acceptable stress response utilizing at least one of the stress scaling methods after the comparison.

3. The method as set forth in claim 1 or 2, wherein the undamaged airfoil and the proposed blended airfoil are on integrally bladed rotors.

4. The method as set forth in claim 1, 2 or 3, wherein at least one of the stress scaling methods places a plurality of strain gauges on a part that has received the proposed blended airfoil, and applies a force to measure a peak stress, and then identifies a location of one of the strain gauges that measures the peak stress, and utilizing the measured peak stress to determine whether the proposed blended airfoil will have an acceptable stress response.

5. The method as set forth in any preceding claim, wherein the stress scaling is modeled on a computer by applying a single force to the proposed blend at a peak deflection node.

6. The method as set forth in claim 5, wherein the stress is determined utilizing the equation: $S = \frac{MF}{2 {{ζω}_{n}}^{2}} σ$ wherein:
*S* = physical stress response
*σ* = modal stress
*MF* = modal force
*ζ* = damping ratio
*ωₙ* = natural frequency.

7. The method as set forth in claim 6, wherein the stress is also determined utilizing the equation: ${s}_{1} = {s}_{0} ∗ \frac{{USUM}_{max , 1}}{{USUM}_{max , 0}} ∗ \frac{{σ}_{1}}{{σ}_{0}} ∗ \frac{{{ω}_{0}}^{2}}{{{ω}_{1}}^{2}}$ wherein:
0 = nominal
1 = blended
*s*₀ = physical stress in the nominal model
*s*₁ = physical stress in the blended model
*USUMₘₐₓ* = peak displacement.

8. The method as set forth in claim 5, wherein the stress scaling method is determined utilizing the equation: ${s}_{1} = {s}_{0} ∗ \frac{{USUM}_{max , 0}}{{USUM}_{max , 1}} ∗ \frac{{σ}_{1}}{{σ}_{0}}$ wherein:
0 = nominal
1 = blended
*s*₀ = physical stress in the nominal model
*s*₁ = physical stress in the blended model
*USUMₘₐₓ* = peak displacement.

9. The method as set forth in any preceding claim, wherein the stress scaling method is performed on a computer program with a model of the proposed blend and by applying a plurality of loaded force responses.

10. The method as set forth in claim 9, wherein the forced responses are evaluated utilizing the following equation: $S = \frac{Fσ}{2 ζ {{ω}_{n}}^{2}}$ wherein:
S = Actual Stress (physical stress)
F = Forcing magnitude (modal force)
σ = Peak airfoil eigenstress (modal stress)
ζ = Damping ratio
*ωₙ* = Natural frequency (2*πf*)*.*

11. The method as set forth in claim 10, wherein the force is determined utilizing the following equation: $F = \left‖{∅}_{i}^{∗}{g}_{i}\right‖$ wherein:
Øᵢ = Displacement vector at node i
${∅}_{i}^{∗} = Displacement$ complex conjugate transpose
gᵢ = Force vector at node i.

12. A method of determining whether a resultant stress in a damaged airfoil with a blend is acceptable comprising the steps:
making a decision as to whether a particular proposed blend to the damaged airfoil meets acceptable stress response utilizing at least one stress scaling method after a comparison to a nominal airfoil;
wherein the nominal airfoil and the damaged airfoil are integrally bladed rotors;
wherein the at least one stress scaling method includes at least one of the following:
the stress scaling method places a plurality of strain gauges on a prior part that has received the proposed blend, and applies a force to measure a peak stress, and then identifies a location of a strain gauge that measures the peak stress, and utilizing the measured peak stress to determine whether the damaged part will have acceptable stress response after the proposed blend;
the stress scaling method is modeled on a computer by applying a single force to the proposed blend at a peak deflection node; and/or
the stress scaling method is performed on a computer program with a model of the proposed blend and by applying a plurality of loaded force responses; and
wherein the stress scaling method considers a nominal airfoil physical response from an undamaged airfoil, along with utilizing the stress scaling methods to determine a predicted blended airfoil physical response.

13. The method as set forth in claim 12, further comprising making a decision as to whether a particular proposed blend meets acceptable stress response utilizing the predicted blended airfoil physical response.

14. The method as set forth in claim 12 or 13, wherein the nominal airfoil and the damaged airfoil are one part of integrally bladed rotors.

15. The method as set forth in claim 12, 13 or 14, wherein the at least one of the stress scaling method places a plurality of strain gauges on a part that has received the proposed blend, and applies a force to measure a peak stress, and then identifies a location of a strain gauge that measures the peak stress, and utilizing the determined peak stress to determine whether the blended part will have acceptable stress response.
